(19) **Europäisches Patentamt**

**European Patent Office**

**Office européen des brevets**

(11) Veröffentlichungsnummer : **0 064 024**
**B1**

(12) **EUROPÄISCHE PATENTSCHRIFT**

(45) Veröffentlichungstag der Patentschrift :
28.08.85

(51) Int. Cl.⁴ : **G 01 J   3/46, B 41 F 33/00**

(21) Anmeldenummer : **82810142.8**

(22) Anmeldetag : **30.03.82**

(54) Verfahren und Vorrichtung zur farbmetrischen Analyse eines gedruckten Farbmessstreifens.

(30) Priorität : **03.04.81 CH 2283/81**

(43) Veröffentlichungstag der Anmeldung :
**03.11.82 Patentblatt 82/44**

(45) Bekanntmachung des Hinweises auf die Patenterteilung : **28.08.85 Patentblatt 85/35**

(84) Benannte Vertragsstaaten :
**AT CH DE FR GB IT LI NL SE**

(56) Entgegenhaltungen :
**EP-A- 0 011 376**
**US-A- 3 995 958**
**US-A- 4 003 660**

(73) Patentinhaber : **GRETAG Aktiengesellschaft**
**Althardstrasse 70**
**CH-8105 Regensdorf (CH)**
**CH DE FR GB IT LI NL SE AT**
**Heidelberger Druckmaschinen Aktiengesellschaft**
**Kurfürsten-Anlage 52-60 Postfach 10 29 40**
**D-6900 Heidelberg 1 (DE)**
**IT AT**

(72) Erfinder : **Ott, Hans**
**Ostring 54**
**CH-8105 Regensdorf (CH)**
Erfinder : **Boeglie, Rolf**
**Gerenstrasse 79**
**CH-8105 Regensdorf (CH)**
Erfinder : **Birch, Ulrich**
**Pfadhagstrasse 11**
**CH-8304 Wallisellen (CH)**
Erfinder : **Kipphan, Helmut, Dr.**
**Bibiena-Strasse 6**
**D-6830 Schwetzingen (DE)**
Erfinder : **Löffler, Gerhard**
**Kiefernweg 3**
**D-6909 Walldorf (DE)**

(74) Vertreter : **Pirner, Wilhelm et al**
**Patentabteilung der CIBA-GEIGY AG Postfach**
**CH-4002 Basel (CH)**

**Beschreibung**

Die Erfindung betrifft ein Verfahren zur farbmetrischen Analyse eines auf einem Druckträger aufgebrachten Farbmessstreifens gemäss dem Oberbegriff des Patentanspruchs 1 sowie ein Densitometer zur Durchführung einer farbmetrischen Analyse gemäß dem Oberbegriff des Anspruchs 10.

Densitometer der zur Rede stehenden Art finden insbesondere im Druckereigewerbe breite Anwendung. Sie ermöglichen dem Drucker anhand einer farbmetrischen Analyse eines mitgedruckten Farbmessstreifens und Vergleichs der dabei gefundenen Messwerte mit Sollwerten eine objektive Beurteilung der Qualität des Druckerzeugnisses sowie die entsprechende Einstellung bzw. Nachregulierung der Druckeinrichtung im Hinblick auf ein gewünschtes Ergebnis. Näheres darüber findet sich in der einschlägigen Fachliteratur, insbesondere auch in US-A-4 200 932 und US-A-3 995 958 und den darin angeführten Druckschriften.

Aus naheliegenden Gründen ist es erstrebenswert, die Ausmessung und Auswertung der Farbmessstreifen so weit wie möglich zu automatisieren. Dementsprechend sind auch schon verschiedene sogenannte Abtast- oder Scanning-Densitometer bekanntgeworden, die mit einem auf einer den Druckbogen überspannenden Brücke hin- und herbeweglichen Messkopf und einer entsprechenden Steuerung ausgestattet sind und den Messstreifen mehr oder weniger selbsttätig abzutasten und auszumessen vermögen.

Ein grundlegendes Problem bei der automatischen Messstreifen-Ausmessung besteht in der Auffindung und Identifizierung der einzelnen Messfelder sowie in der Auffindung einer geeigneten Messposition bzw. richtigen Zuordnung der Messsignale zu den einzelnen Messfeldern. Dabei muss berücksichtigt werden, dass sich der Messkopf bzw. die ihn steuernde Elektronik einzig und allein an der im Messstreifen enthaltenen Information selbst orientieren kann, wenn von dem ungebräuchlichen und in der Regel unerwünschten Sonderfall abgesehen wird, dass zusätzliche Hilfsmittel wie Synchronisierzeichen oder ähnliches verwendet werden (siehe z. B. EP-A-11376), deren Positionen in einem Erkennungslauf vom Messkopf festgestellt werden und die dann für anschließende Abtastungen gespeichert werden.

Bei dem in der DE-A-2 901 980 beschriebenen Abtast-Densitometer wird dieses Problem angegangen, indem der Messstreifen kontinuierlich abgetastet und das dabei erzeugte Messsignal zweimal differenziert wird. Durch das zweimalige Differenzieren entstehen an den Messfeldgrenzen Nulldurchgänge des Signals. Als Messfeldmitte und geeigneter Messort wird nun derjenige Ort definiert, der in einem bestimmten, vorgegebenen Abstand auf einen Nulldurchgang und damit auf eine Messfeldgrenze folgt. Zur einfachen Korrektur der bei dieser Vorgehensweise auftretenden Aperturfehler werden durch der Struktur des zu messenden Farbmessstreifens entsprechenden Wechsel der dem Messkopf vorgeschalteten Farbfilter nur Dichtesprünge in einer Richtung für die Erkennung der Messfeldgrenzen herangezogen.

Bei diesem bekannten Densitometer ist die Ermittlung der Messfeldgrenzen nur gewährleistet, wenn im Farbmessstreifen Volltonfelder mit ausreichend hoher Dichte und ständig wechselnden Farben aufeinanderfolgen. Ein weiterer, noch viel schwerwiegender Nachteil besteht darin, dass dem Densitometer sowohl der Aufbau bzw. die Struktur des Messstreifens als auch die nominellen Messfeldlängen bekannt sein müssen, so dass die Farbfilter in geeigneter Weise gewechselt und die Messfeldmitten als Messpositionen bestimmt werden können.

In der US-A-3 995 958 ist ein anderes bis zu einem gewissen Grad automatisch arbeitendes Abtast-Densitometer beschrieben. Dieses Densitometer tastet den Messstreifen in diskreten Schritten ab, wobei die Feststellung einer Farbdichte-Messwertänderung bestimmten Ausmasses bei zwei aufeinanderfolgenden Abtastschritten zur Anzeige eines Uebergangs zwischen zwei Messstreifenblöcken mit unterschiedlichen Farbeigenschaften ausgenutzt wird. Als massgeblicher Farbdichte-Messwert für einen Block wird der Messwert an derjenigen Stelle ausgewählt, die einen bestimmten Abstand von der nach dem genannten Kriterium ermittelten Uebergangsstelle hat. Nach jedem Blockübergang wird eine Wechsel des Farbfilters durchgeführt, um für den nächstfolgenden Blockübergang einen ausreichend grossen Dichtesprung sicherzustellen.

Der Nachteil dieses bekannten Densitometers besteht darin, dass es einen ganz bestimmten Aufbau des Farbmessstreifens voraussetzt, nämlich eine zyklische Folge von sich gegenseitig überlappenden Vollton-Blöcken oder Leerblöcken. Ferner muss die Farbreihenfolge der einzelnen Blöcke dem Densitometer bzw. dessen Steuerung bekannt sein. Desgleichen müssen auch die Längen der einzelnen Blöcke bekannt sein, um die effektiven Messorte aufgrund der relativ ungenau ermittelten Blockübergänge zu bestimmen.

Durch die vorliegende Erfindung sollen nun diese Nachteile vermieden und ein Verfahren und eine Vorrichtung der zur Rede stehenden Art derart verbessert werden, dass eine weitestgehende vollautomatische Abtastung beliebiger Farbmessstreifen ermöglicht wird, und zwar unabhjängig vom Aufbau des Messstreifens und ohne dass dessen Struktur im voraus bekannt sein muss. Insbesondere sollen für die automatische Abtastung keine Synchronisiermarken oder dergleichen und ferner auch keine Filterwechsel nötig sein.

Das diesen Anforderungen gerecht werdende Verfahren und das entsprechende Densitometer sind

erfindungsgemäss durch die in den unabhängigen Ansprüchen beschriebenen Massnahmen und Merkmale gekennzeichnet. Vorteilhafte Ausgestaltungen sind in den abhängigen Ansprüchen beschrieben.

Im folgenden wird die Erfindung anhand der Zeichnung näher erläutert.

Es zeigen :

Figur 1  eine etwas vereinfachte Gesamtansicht eines Ausführungsbeispiels einer erfindungsgemässen Vorrichtung,

Figur 2  eine teilweise aufgeschnittene Ansicht der Messbrücke aus Fig. 1,

Figur 3  die Messbrücke aus Fig. 2 in teilweise demontiertem bzw. geöffnetem Zustand,

Figur 4  eine Vorderansicht des Messkopfs aus Fig. 3,

Figur 5  eine Unteransicht desselben Messkopfs,

Figuren 6 und 7  Diagramme zur Erläuterung des erfindungsgemässen Verfahrens,

Figur 8  ein grundsätzliches Blockschaltbild des elektrischen Teils der Vorrichtung, und

Figuren 9 und 10  einen Vertikalschnitt und eine Unteransicht eines Klemmblocks.

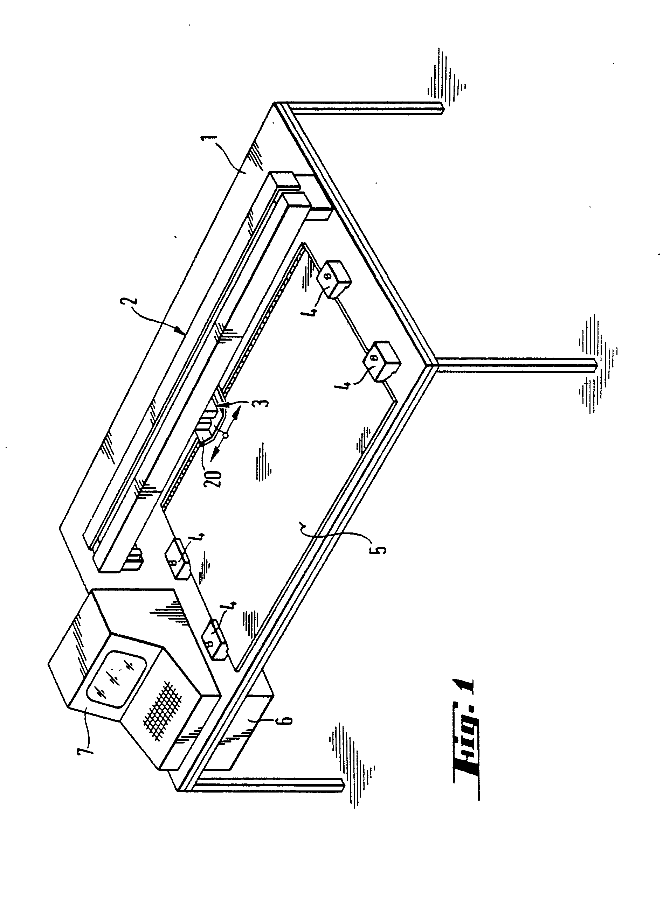

Die in Fig. 1 dargestellte Vorrichtung umfasst einen Messtisch 1 und auf diesem eine Messbrücke 2 mit einem Messwagen 3, vier Klemmblöcke 4 zum Festhalten eines auszumessenden Druckbogens 5, einen Elektronikteil 6 und einen Personal-Computer 7. Die Platte des Tischs 1 besteht aus Holz und weist unter einer obersten Deckschicht eine Stahlblechschicht auf, die es erlaubt, den Druckbogen 5 mittels Magneten oder dergleichen festzuhalten. Der Elektronikteil 6 ist als Einschubmodul ausgeführt. Der mit einem integrierten Bildschirm-Terminal versehene Personal-Computer 7 ist drehbar auf dem Tisch befestigt. Messwagen 3, Elektronikteil 6 und Personal-Computer 7 sind über nicht gezeigte Leitungen verbunden.

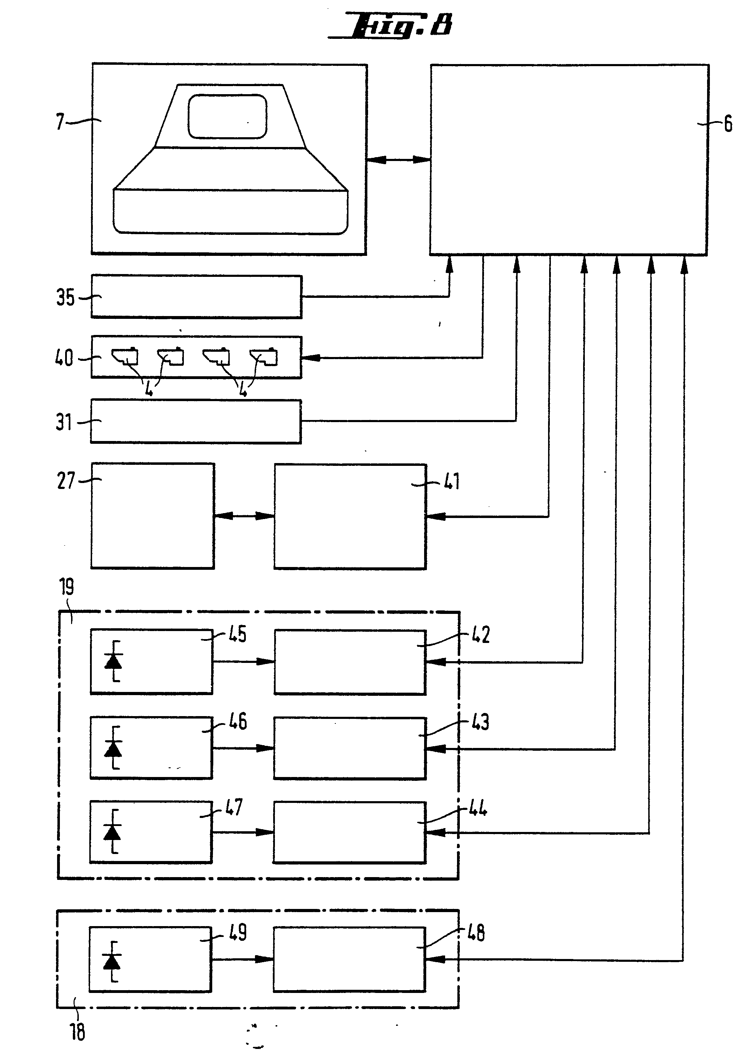

Der Elektronikteil 6 umfasst ein Mikroprozessorsystem und Schnittstellen zur Aufbereitung der ihm zugeführten sowie der von ihm erzeugten Mess- und Steuersignale. Das Prozessorsystem im Elektronikteil arbeitet mit dem Personal-Computer 7 im sogenannten Master-Slave-Betrieb zusammen, wobei der Personal-Computer die Kontrollfunktion hat und die Auswertung der gemessenen und eingegebenen Daten vornimmt, während das System im Elektronikteil für die Ausführung der Messungen und der Bewegungen des Messwagens zuständig ist (siehe auch Fig. 8).

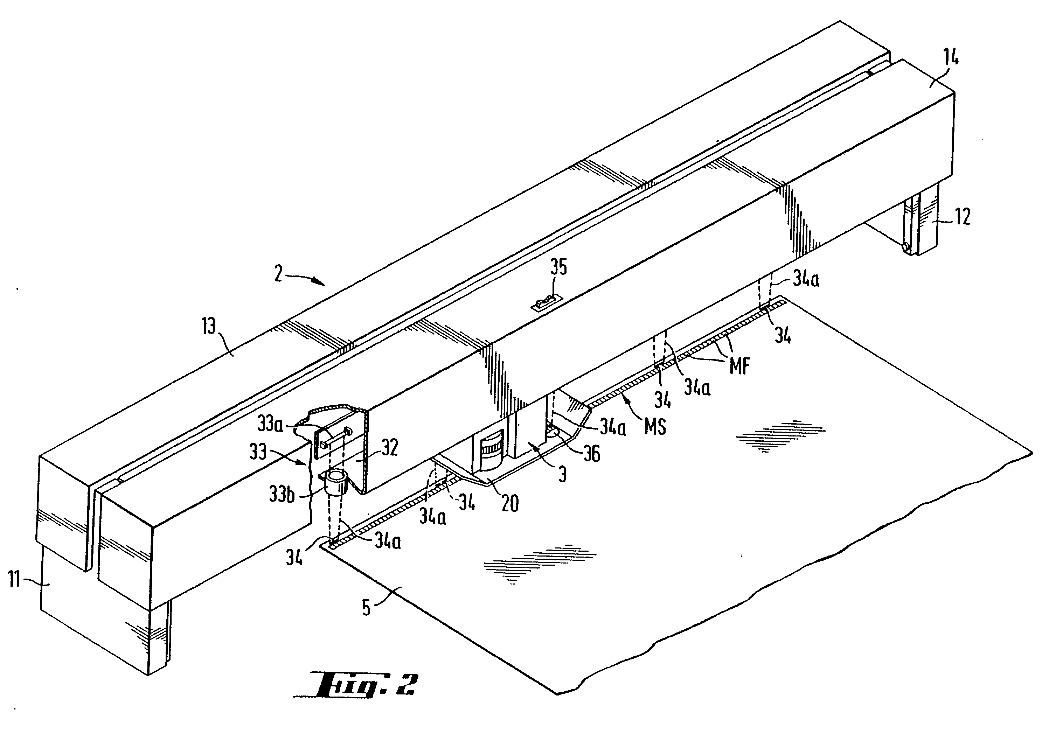

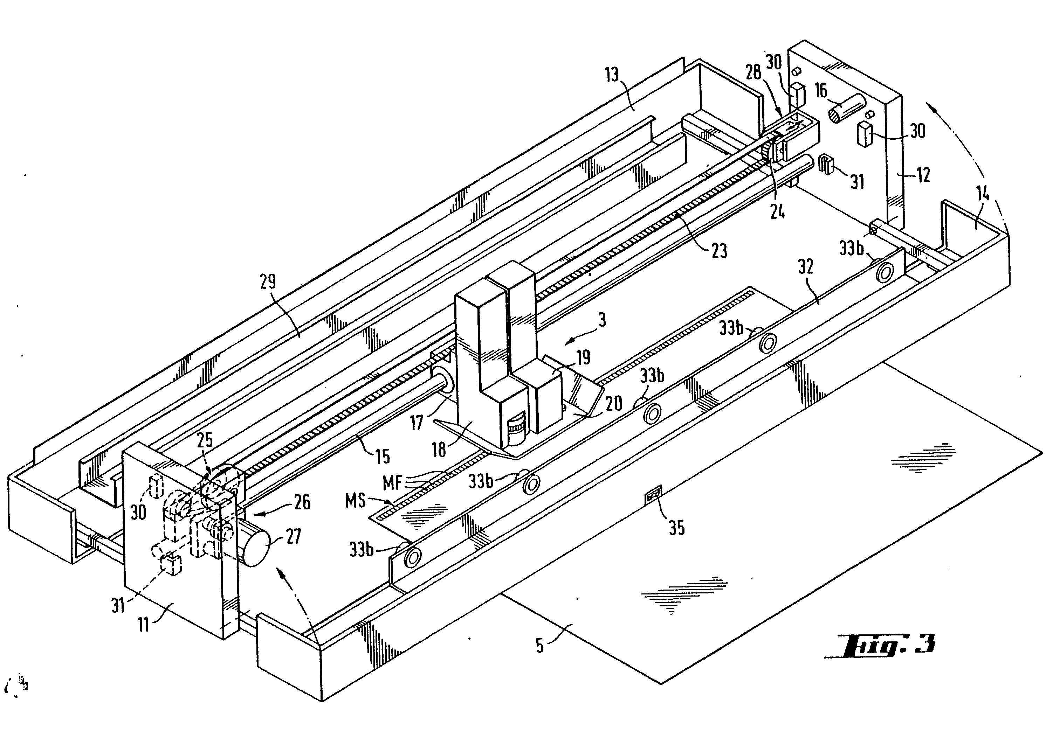

In den Fig. 2 und 3 ist die Messbrücke 2 grösser dargestellt. Sie umfasst zwei vertikale Seitenteile 11 und 12, die die übrigen Teile der Brücke tragen, sowie zwei Abdeckhauben 13 und 14, die den Zwischenraum zwischen den beiden Seitenteilen überdachen und an diesen schwenkbar gelagert sind, so dass sie in die in Fig. 3 dargestellte Lage auseinandergeklappt werden können und den Zugang zu den inneren Teilen der Messbrücke freigeben. Die beiden Seitenteile 11 und 12 sind durch eine Führungswelle 15 und eine nur andeutungsweise dargestellte Verbindungsstange 16 miteinander verbunden.

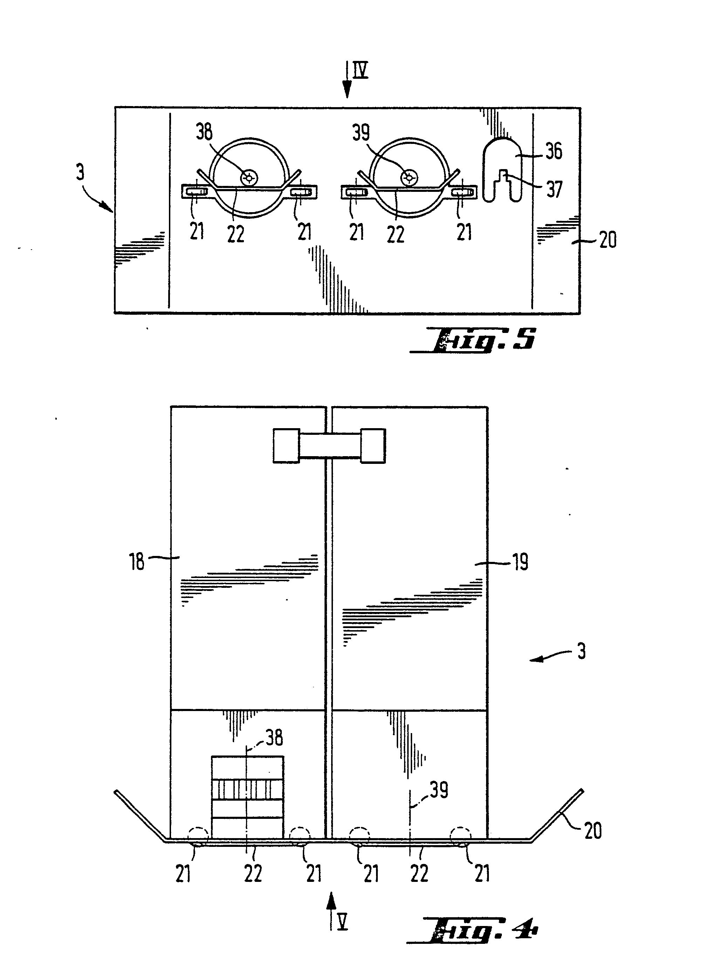

Auf der Führungswelle 15 ist der als Ganzes mit 3 bezeichnete Messwagen hin- und herbeweglich sowie um die Welle schwenkbar geführt. Der Messwagen 3 besteht aus einem mit zwei Kugelbüchsen versehenen Führungsblock 17 und zwei an diesem befestigten Messköpfen 18 und 19 sowie einem beidseits nach oben abgewinkelten Leit- oder Niederhalteblech 20. An der Unterseite ist der Messwagen mit Rollen 21 sowie zwei gefederten Niederhaltebügeln 22 versehen (Fig. 4 und 5). Im Betrieb stützt sich der Messwagen mit seinen Rollen 21 auf dem auszumessenden Druckbogen 5 ab, wodurch der Abstand zwischen den Messköpfen 18 und 19 und den einzelnen Feldern MF des am Druckbogen 5 befindlichen Messstreifens MS stets konstant ist. Die Messköpfe sind im Prinzip von der in der US-A-4 078 858 beschriebenen Art, wobei der Messkopf 19 simultan drei Farbkanäle misst, während der andere Messkopf 18 nur einkanalig ausgelegt, dafür aber mit manuell oder gegebenenfalls programmgesteuert wechselbaren Filtern ausgestattet ist. Der Messkopf 18 ist für Sonderfälle zur Messung von Haus- und Schmuckfarben bestimmt, im Normalfall wird jedoch, wie weiter unten noch erläutert wird, stets der Simultanmesskopf 19 verwendet.

Zum Antrieb des Messwagens 3 ist ein Zahnriemen 23 vorgesehen, der über zwei an je einem der Seitenteile 11 und 12 drehbar gelagerte Rollen oder Walzen 24 und 25 geführt und an dessen unterem Trum der Führungsblock 17 befestigt ist. Die in der Fig. 3 linke Walze 25 ist über ein nur strichliert angedeutetes Zahnriemen-Untersetzungsgetriebe 26 von einem Schrittmotor 27 angetrieben. Die andere Walze 24 ist in einer Spannvorrichtung 28 frei drehbar gelagert. Schrittmotor 27 und Getriebe 26 sind so bemessen, dass der Zahnriemen 23 und damit der Messwagen 3 pro vollständigem Motor-Schritt um 0,1 mm weitertransportiert wird.

In der hinteren Abdeckhaube 13 ist ein Führungsprofil 29 angeordnet, in welchem die nicht dargestellte elektrische Flachleiter-Verbindung des Messwagens 3 mit dem Elektronikteil 6 verläuft. An den Seitenteilen 11 und 12 sind ferner noch durch Blöcke 30 angedeutete Schnellverschlüsse zum Fixieren der beiden Abdeckhauben 13 und 14 in der hochgeklappten geschlossenen Stellung sowie je eine Gabellichtschranke 31 angeordnet, welche mit einem nicht dargestellten Blechstreifen o.ä. am Führungsblock 17 bzw. Messwagen 3 derart zusammenwirkt, dass der Messwagen automatisch angehalten wird, wenn er dem einen oder dem anderen Seitenteil z. B. infolge eines Steuerungsfehlers näher als eine bestimmte Mindestdistanz kommt.

In der vorderen Abdeckhaube 14 ist eine im Querschnitt U-förmige Halterung 32 befestigt, in welcher fünf gleichmässig über die Länge der Messbrücke verteilte Markierungslampen 33 angeordnet sind. Diese Lampen bestehen je aus einer Lichtquelle in Form einer sogenannten Strichlampe 33a im oberen

3

Schenkel der Halterung und einer Projektionsoptik 33b im unteren Halterungsschenkel und erzeugen auf dem Druckbogen 5 fünf in einer Linie liegende Markierungslichtstriche 34 von je etwa 20 mm Länge. Die Strahlengänge der Lampen 33 sind in der Fig. 2 durch die strichlierten Linien 34a angedeutet. Die Lichtstriche dienen zur Ausrichtung des Druckbogens 5 derart, dass der Messstreifen MS exakt unter der Bewegungsbahn der beiden Messköpfe 18 und 19 zu liegen kommt. Zur genauen Justierung der Lichtstriche selbst sind die Projektionsoptiken 33b exzentrisch gefasst und drehbar in der Halterung angeordnet. Anstelle der Lichtstriche können als Markierungen selbstverständlich auch Lichtpunkte oder Kreuze oder dergleichen vorgesehen sein.

Schliesslich ist auf der Oberseite der vorderen Abdeckung 14 noch eine Schaltwippe 35 vorgesehen, mittels welcher der Messwagen 3 manuell gesteuert in die gewünschte Messposition längs des Messstreifens MS gefahren werden kann. Zur Erleichterung dieser manuellen Positionierung ist das Niederhalteblech 20 mit einem Visier-Fenster 36 (Fig. 5) versehen, dessen Kontur einen Zeiger 37 bildet, der in fester räumlicher Zuordnung zu den mit 38 und 39 bezeichneten optischen Achsen der beiden Messköpfe 18 und 19 steht.

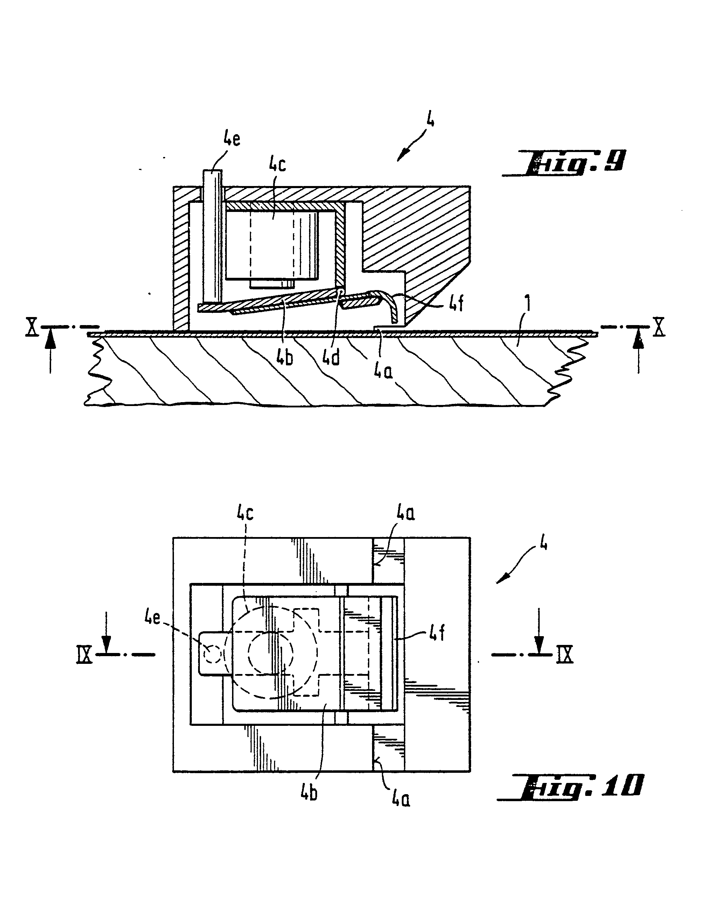

Der Aufbau der Magnet-Klemmblöcke 4 geht aus den Fig. 9 und 10 hervor. Jeder Block 4 umfasst zwei Bogenanschläge 4a. Zwischen diesen ist der Anker 4b eines Niederhaltemagneten 4c angeordnet und um eine horizontale Achse 4d schwenkbar. Im hinteren Blockteil ist noch ein vertikaler Stift 4e verschiebbar gelagert, welcher mit dem Anker 4b mechanisch gekoppelt ist und die Ankerstellung optisch anzeigt. Bei Beaufschlagung des Magneten 4c mit Spannung zieht er den Anker 4b hoch und drückt damit gleichzeitig ein federndes Anpressglied 4f am Anker 4b nach unten, wodurch ein allenfalls angeschlagener Druckbogen festgeklemmt wird. Die Betätigung der Bogenklemmblöcke 4 erfolgt via Elektronikteil 6 automatisch, bevor der Messwagen 3 in Bewegung gesetzt wird.

Die elektrischen Verbindungsleitungen der einzelnen Teile der Messbrücke untereinander und mit dem Elektronikteil sind in der Zeichnung der Uebersichtlichkeit halber nicht dargestellt.

In Fig. 8 ist ein prinzipielles Blockschaltschema der elektrischen Teile der Vorrichtung, soweit es zum Verständnis von deren Funktionsweise nötig ist, dargestellt. Es versteht sich, dass das Dargestellte rein beispielsweisen Charakter besitzt und die einzelnen Funktionen der Vorrichtung ohne weiteres auch durch andere Implementationen realisiert werden könnten.

Der zentrale Teil der Schaltung ist, wie schon erwähnt wurde, der Personal-Computer 7. Dabei kann es sich im Prinzip um jeden beliebigen Klein- oder Mikrocomputer handeln. Der Personal-Computer steht mit dem Mikroprozessorsystem des Elektronikteils 6 in Verbindung, an welches wiederum über nicht näher bezeichnete Leitungen die übrigen elektrischen und elektronischen Baugruppen und -teile der Vorrichtung angeschlossen sind. Es sind dies die Wippe 35 zum manuellen Steuern des Messwagens, die hier in ihrer Gesamtheit mit 40 bezeichneten vier Magnet-Klemmblöcke 4 zum Niederhalten des Druckbogens auf dem Messtisch, die Lichtschranken 31 zur Begrenzung der Messwagenbewegung, eine Schnittstelle 41 zur Steuereung des Schrittmotors 27, drei Messverstärker 42-44 für die drei Fotosensoren 45-47 im Simultanmesskopf 19 und ein Messverstärker 48 für den Fotosensor 49 im Spezial- oder Zusatzmesskopf 18. Ferner sind noch an allen Analog-Digital-Uebergängen nicht gesondert dargestellte Analog-Digitalwandler vorgesehen.

Nach dem Vorstehenden stimmen somit der grundsätzliche apparative Aufbau der Vorrichtung und ihre grundsätzliche Funktionsweise mit denen der bekannten Vorrichtungen dieser Art, beispielsweise etwa der in der US-A-3 995 958 in grösster Ausführlichkeit dargestellten Vorrichtung überein : Der Messwagen 3 wird von Hand oder automatisch dem zu untersuchenden Messstreifen MS auf dem Druckbogen 5 entlanggeführt, und die dabei vom (jeweils aktiven) Messkopf 18 oder 19 erfassten Remissionswerte werden in einer Elektronik (hier Elektronikteil 6 und Personal-Computer 7) verarbeitet bzw. ausgewertet.

Im folgenden wird die Arbeitsweise der Vorrichtung bzw. das erfindungsgemässe Messverfahren und die Unterschiede zu der eben genannten bekannten Vorrichtung näher erläutert.

Eine der grundlegenden Ideen des erfindungsgemässen Verfahrens besteht darin den Messvorgang in zwei Phasen aufzuteilen, und zwar in einen sogenannten Erkennungslauf und einen oder mehrere darauf folgende Messläufe. Im zeitlich als erstes durchgeführten Erkennungslauf werden der der Vorrichtung zunächst unbekannte Farbmessstreifen in kurz aufeinanderfolgenden Abständen abgetastet und aus den dabei gewonnenen Abtastwerten der Aufbau des Messstreifens sowie die geeignetsten Messpositionen im Streifen ermittelt. In den folgenden Messläufen werden nun die Farbdichten an den während dem Erkennungslauf bestimmten Messpositionen auf beliebig vielen Druckbogen mit gleichen Farbmessstreifen gemessen und der Auswertung zugeführt. Beim ersten Druckbogen kann der Messlauf natürlich auch zusammen mit dem Erkennungslauf durchgeführt werden.

Im nachstehenden Fliessschema ist dieses erfindungsgemässe Arbeitsprinzip nochmals übersichtlich dargestellt.

(Siehe das Schema, Seite 5 f.)

START

Erkennungslauf:

Geometrie und Aufbau eines unbekannten Farbmessstreifens sowie Messpositionen für nachfolgende Messläufe werden bestimmt

Messlauf:

An den während dem Erkennungslauf bestimmten Positionen werden die Farbdichten gemessen

Auswertung der gemessenen Farbdichtedaten und entsprechende Ausgabe

weitere Drucksachen mit gleichem Farbmess- streifen?

Ja

Nein

Drucksachen mit neuem Farbmessstreifen?

Ja

Nein

ENDE

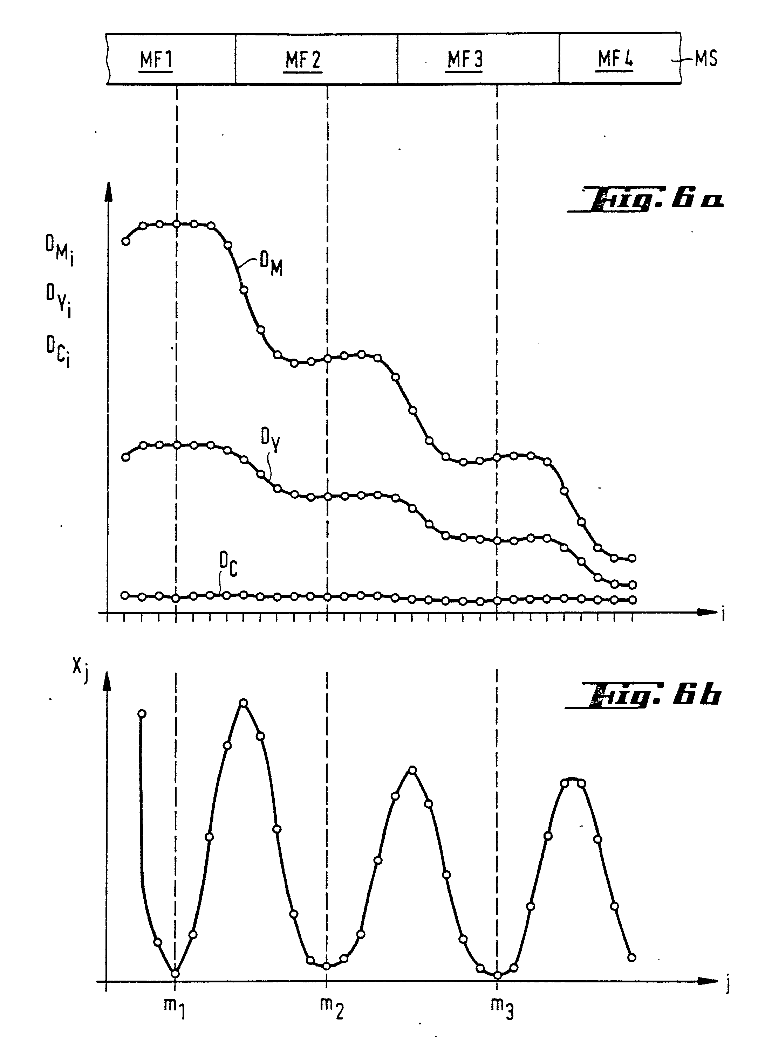

In Fig. 6a ist ein Ausschnitt aus einem typischen Dichteverlauf dargestellt, wie er beim periodischen Abtasten eines Messstreifens MS während des Erkennungslaufs entsteht, wobei auf der Abszisse die mit i indexierten Vorschubinkremente des Messwagens bzw. Messkopfs längs des Messstreifens MS aufgetragen sind. Die drei Kurven $D_M$, $D_Y$ und $D_C$ zeigen den Verlauf der simultan gemessenen Dichtewerte $D_{M_i}$, $D_{Y_i}$ und $D_{C_i}$ für die drei Farben Magenta, Gelb und Cyan in den einzelnen Abtastpunkten i für die hier mit MF1 bis MF4 bezeichneten Messfelder des Messstreifenausschnitts MS.

Wie man erkennt, besitzen die Dichteverläufe innerhalb der einzelnen Messfelder MF mehr oder weniger ausgeprägte Flachstellen, während sie an den Uebergängen zwischen den einzelnen Messfeldern relativ steile Flanken aufweisen. Die Mitten dieser Flachstellen sind offenschtlich mögliche Messpositionen für die Messläufe. Die Analyse des Messstreifenaufbaus während des Erkennungslaufs beruht nun gemäss dem zweiten wesentlichen Grundgedanken der Erfindung auf der Ermittlung dieser Flachstellen der Dichteverläufe. Dabei werden aus allen in noch zu beschreibender Weise ermittelten Flachstellen und damit im Prinzip möglichen Messpositionen die richtigen Messpositionen dadurch ausgewählt, dass ausserdem noch eine vorgegebene minimale Messfeldlänge berücksichtigt und verhindert wird, dass auf längere Messfelder mehrere Messpositionen entfallen. Nach dieser Analyse des geometrischen Aufbaus des Messstreifens können sich noch den qualitativen Typus (Farbe, Rasterart etc.) der Messfelder betreffende Analysen anschliessen.

Zur Erkennung der Flachstellen wird der unbekannte Messstreifen in überlappende Intervalle gleicher Länge unterteilt, wobei bei jedem Abtastpunkt i ein aus n Abtastpunkten bestehendes neues Intervall j beginnt. Die Länge (n-1) mal Abstand zwischen zwei Abtastpunkten i der Intervalle j entspricht dabei vorzugsweise etwa der Differenz zwischen der durch die Messoptik minimal möglichen Messfeldlänge und dem Durchmesser des Messflecks des Messkopfs.

Es werden nun für jede der drei Farben einzeln die Standardabweichungen in jedem Intervall oder die Summe der Absolutwerte der Abweichungen der Dichtmesswerte vom Dichtemittelwert in jedem Intervall gebildet. Jetzt werden die drei Standardabweichungen bzw. Absolutwertsummen in den drei Farben für jedes Intervall summiert oder es wird für jedes Intervall die maximale Standardabweichung bzw. Absolutwertsumme ausgewählt. Der so gefundene Wert sei mit Xj bezeichnet.

Mathematisch lassen sich diese Operationen etwa wie folgt formulieren :

Intervalleinteilung :

Intervall j = Abtastpunkte j bis $j + n - 1$

$1 \leq j \leq i_{max} - n + 1$

n = Anzahl Abtastpunkte pro Intervall, $i_{max}$ = max. Abtastschrittzahl.

Dichtemittelwerte in den drei Farben in jedem Intervall j :

$$\overline{D}_{C_j} = \frac{1}{n} \sum_{i=j}^{j+n-1} D_{C_i}$$

$$\overline{D}_{M_j} = \frac{1}{n} \sum_{i=j}^{j+n-1} D_{M_i}$$

$$\overline{D}_{Y_j} = \frac{1}{n} \sum_{i=j}^{j+n-1} D_{Y_i}$$

Bildung der Summé der Absolutwerte der Abweichungen der Dichtemesswerte vom Dichtemittelwert des zugehörigen Intervalls für jeden Farbkanal in jedem Intervall :

$$A_{C_j} = \sum_{i=j}^{j+n-1} (|D_{C_i} - \overline{D}_{C_j}|)$$

$$A_{M_j} = \sum_{i=j}^{j+n-1} (|D_{M_i} - \overline{D}_{M_j}|)$$

$$A_{Y_j} = \sum_{i=j}^{j+n-1} (|D_{Y_i} - \overline{D}_{Y_j}|)$$

oder

Bildung der empirischen Standardabweichung in jedem Intervall für jeden Dichteverlauf einzeln :

$$S_{C_j} = \left[ \frac{1}{n-1} \sum_{i=j}^{j+n-1} (D_{C_i} - \overline{D}_{C_j})^2 \right]^{1/2}$$

$$S_{M_j} = \left[ \frac{1}{n-1} \sum_{i=j}^{j+n-1} (D_{M_i} - \overline{D}_{M_j})^2 \right]^{1/2}$$

$$S_{Y_j} = \left[ \frac{1}{n-1} \sum_{i=j}^{j+n-1} (D_{Y_i} - \overline{D}_{Y_j})^2 \right]^{1/2}$$

Bestimmung des Maximalwerts aus $A_{C_j}$, $A_{M_j}$, $A_{Y_j}$ oder $S_{C_j}$, $S_{M_j}$, $S_{Y_j}$ in jedem Intervall :

$$A_{jmax} = max \ (A_{C_j}, \ A_{M_j}, \ A_{Y_j})$$

bzw.

$$S_{jmax} = max \ (S_{C_j}, \ S_{M_j}, \ S_{Y_j})$$

oder

Bildung der Summe von $A_{C_j}$, $A_{M_j}$, $A_{Y_j}$ bzw. $S_{C_j}$, $S_{M_j}$, $S_{Y_j}$ in jedem Intervall :

$$\sum A_j = A_{C_j} + A_{M_j} + A_{Y_i}$$

bzw.

$$\sum S_j = S_{C_j} + S_{M_j} + S_{Y_j} \ .$$

Auswahl einer der Werte $A_{jmax}$, $S_{jmax}$,

$$\sum A_j \ oder \sum S_j$$

als Basiswerte $X_j$ für die weitere Auswertung.

Trägt man die Werte $X_j$ gemäss Fig. 6b auf, so stellt man fest, dass der $X_j$-Verlauf unabhängig von der getroffenen Wahl im Bereich der Flachstellen der Dichteverläufe relative Minima aufweist. Umgekehrt kann daher geschlossen werden, dass die Mitten derjenigen Intervalle, für welche der $X_j$-Verlauf relative Minima aufweist, als mögliche Messpositionen in Frage kommen. In Fig. 6b sind solche möglichen Messpositionen mit $m_1$ bis $m_3$ bezeichnet.

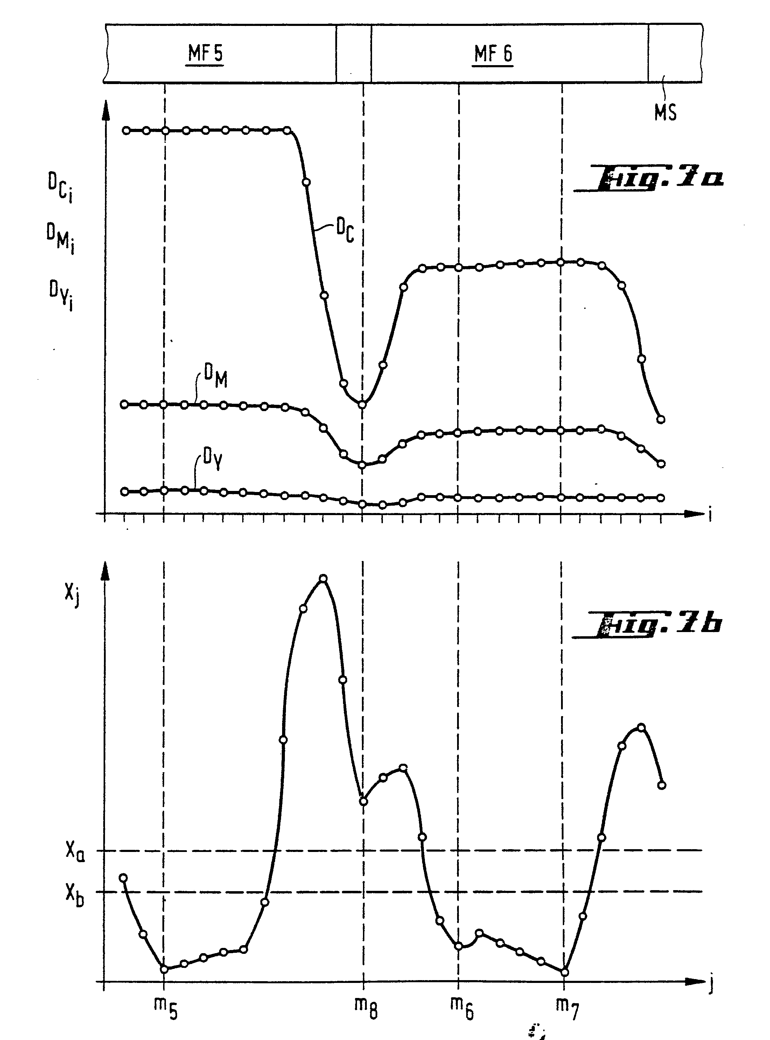

Wie schon weiter vorne erwähnt, sind von diesen möglichen Messpositionen nicht tatsächlich alle als effektive Messpositionen brauchbar. Die Fig. 7b zeigt z. B., dass relative Minima des $X_j$-Verlaufs auch bei Zwischenräumen zwischen zwei Messfeldern -hier z. B. zwischen den mit MF 5 und MF 6 bezeichneten- oder bei ganz schmalen, nur für visuelle Kontrollen bestimmten Feldern auftreten oder dass innerhalb eines einzigen Messfeldes -hier MF 6- z. B. infolge Inhomogenitäten auch mehrere Minima auftreten können.

Um diese ungewollten Messpositionen bzw. Mehrdeutigkeiten ausschalten zu können, werden nun nur solche Minima berücksichtigt, deren Werte $X_j$ einen bestimmten Schwellenwert $X_a$ unterschreiten. Im Beispiel gemäss Fig. 7b ist dies für die Minimastellen $m_5$, $m_6$ und $m_7$ der Fall, während $X_j$ bei der Zwischenraum-Minimastelle $m_8$ über dem Schwellenwert $X_a$ liegt. Als Alternative können unechte Messpositionen auf zu schmalen Messfeldern bzw. Zwischenräumen auch dadurch unterdrückt werden, dass der durch die Messoptik gegebene Minimalabstand zwischen zwei Messpositionen berücksichtigt wird.

Zur Beseitigung von Mehrfach-Messpositionen auf ein und demselben Messfeld kann so vorgegangen werden, dass man die drei Farbdichten an aufeinanderfolgenden minimastellen miteinander vergleicht und daraus bestimmt, ob die Minimastellen auf dem gleichen Messfeld liegen oder nicht. Als Alternative kann getestet werden, ob zwischen zwei aufeinanderfolgenden Minimastellen eine Messfeldgrenze liegt. Eine solche Grenze ist dann vorhanden, wenn zwischen den beiden Minimastellen ein Intervall existiert, dessen $X_j$ einen zweiten Schwellenwert $X_b$ überschreitet. In Fig. 7b ist dies z. B. für das Paar $m_8$-$m_6$ der Fall, während die Bedingung für das paar $m_6$-$m_7$ nicht zutrifft. diese beiden messpositionen somit auf demselben Messfeld liegen. in diesem Fall wird man von den zwei oder mehreren Messpositionen eine auswählen, vorzugsweise diejenige mit dem kleinsten $X_j$.

Mit den bisherigen Schritten des Erkennungslaufs wurde mit Ausnahme weniger spezieller Messfelder, die von der Vorrichtung nicht erkannt bzw. unterschieden werden können (z. B. aufeinanderfolgende gleichfarbige Linienrasterfelder, die sich nur durch die Richtung der Rasterlinien unterscheiden), der geometrische Aufbau eines unbekannten Farbmessstreifens ermitelt. Mit den im folgenden beschriebenen prinzipiellen Vorgehensweisen können, sofern erwünscht, auch darüber hinausgehende Informationen, wie z. B. Rasterart etc. über den Messstreifen gewonnen werden. Der Grad dieser automatischen Erkennung bzw. Analyse hängt dabei davon ab, wieviel Information der Vorrichtung über den betreffenden Messstreifen bereits bekannt ist.

Falls der Vorrichtung der Typ des zu analysierenden Messstreifens bekant ist oder falls der zu erkennende Messstreifen aus einzelnen Stücken bekannter Messstreifen-Typen zusammengesetzt ist, können bekannte Korrelations- oder Vergleichsverfahren zur vollautomatischen Typus-Bestimmung herangezogen werden.

Bei einem unbekannten Messstreifen müssen der Vorrichtung gewisse Angaben über die vorkommenden Messfeld-Typen vor dem Erkennungslauf eingegeben werden. Die Vorrichtung versucht dann während des Erkennungslaufs den geometrischen Aufbau des Streifens sowie die Typen aller Messfelder zu bestimmen. Nicht erkannte oder nicht bestimmbare Messfelder müssen dann von Hand definiert bzw. spezifiziert werden.

**0 064 024**

Eine halbautomatische Messfeld-Bestimmung wäre z. B. auch möglich, indem der Vorrichtung vor dem Erkennungslauf die Dichtesollwerte mit entsprechenden Toleranzen für alle vorkommenden Messfeldtypen eingegeben werden.

Grundsätzlich kann der Erkennungslauf natürlich auch manuell gesteuert durchgeführt werden. Der Messkopf wird dabei manuell sukzessive auf den einzelnen Messfeldern positioniert und gleichzeitig werden die nötigen Angaben über den betreffenden Messfeld-Typus via Tastatur eingegeben. Die Dichtewerte und die Messposition werden automatisch ermittelt bzw. festgehalten.

Auch im Falle, dass der Messstreifen der Vorrichtung bekannt ist, kann auf einen Erkennungslauf verzichtet werden. Um einen allfälligen Papierverzug zu berücksichtigen, werden dabei lediglich die Positionen des ersten und des letzten Messfelds manuell eingegeben.

Das folgende Fliessschema gibt die einzelnen Schritte des Erkennungslaufs nochmals übersichtlich wieder :

(Siehe das Schema, Seite 9 f.)

```
                    ╭─────────────────────╮
                    │   Erkennungslauf    │
                    ╰─────────────────────╯
                              │
   ╱──────────────────────────────────────────────╲
   │ falls bekannt, Eingabe des Farbmess-          │
   │ streifen-Typs                                 │
   │ oder Eingabe aller vorkommenden Mess-         │
   │ feld-Typen                                    │
   ╲──────────────────────────────────────────────╱
                              │
   ┌──────────────────────────────────────────────┐
   │         Abtastung des unbekannten Farb-       │
   │ messstreifens durch simultane Messung von drei│
   │ Farbdichten an jedem Abtastpunkt              │
   └──────────────────────────────────────────────┘
                              │
   ┌──────────────────────────────────────────────┐
   │ Ermittlung von Flachstellen (= mögliche Mess- │
   │ positionen) in den drei Dichteverläufen       │
   └──────────────────────────────────────────────┘
                              │
   ┌──────────────────────────────────────────────┐
   │ Auswahl der eigentlichen Messpositionen aus   │
   │ allen ermittelten Flachstellen.               │
   │ (Keine Messungen auf zu schmalen Feldern und  │
   │ keine Mehrfachmessungen auf langen Feldern)   │
   └──────────────────────────────────────────────┘
                              │
   ┌──────────────────────────────────────────────┐
   │ Bestimmung der Typen aller Messfelder (Farbe, │
   │ Rasterart etc.)                               │
   └──────────────────────────────────────────────┘
                              │
   ╱──────────────────────────────────────────────╲
   │ Eingabe der nicht bestimmbaren Mess-          │
   │ felder                                        │
   ╲──────────────────────────────────────────────╱
                              │
```

Die Schritte Abtastung, Flachstellenermittlung und Flachstellenauswahl bei der geometrischen Analyse des Messstreifens sind in den folgenden Fliessschemen detaillierter dargestellt. Anhand dieser Fliessschemen ist es dem Fachmann ohne weiteres möglich, ein geeignetes Steuerungsprogramm für die Prozessorsysteme im Elektronikteil 6 und im Personal-Computer 7 zu konzipieren.

```
              ╭─────────────────────────╮
              │  Abtastung, Flachstellen-│
              │  ermittlung, Auswahl     │
              ╰─────────────────────────╯
                           │
              ┌─────────────────────────┐
              │ Messkopf an ersten Ab-   │
              │ tastpunkt                │
              └─────────────────────────┘
                           │
                          ▷─○
┌─────────────────────────┐   ┌─────────────────────────┐
│ Messkopf-Vorschub um     │   │ simultane Messung von    │
│ einen Abtastschritt      │   │ drei Farbdichten         │
└─────────────────────────┘   └─────────────────────────┘
                                          │
                                       ╱Vor-╲
                          Nein    ╱ letzter Ab- ╲
                          ◇  tastpunkt des 1. In-  ◇
                                ╲ tervalls? ╱
                                    ╲   ╱
                                     Ja
                          ┌─────────────────────────┐
                          │ Intervall-Zähler  j = 0  │
                          └─────────────────────────┘
                                    ○◀
                          ┌─────────────────────────┐
                          │ Messkopf-Vorschub um einen│
                          │ Abtastschritt            │
                          └─────────────────────────┘
                                     │
                          ┌─────────────────────────┐
                          │ simultane Messung von drei│
                          │ Farbdichten              │
                          └─────────────────────────┘
                                     │
                          ┌─────────────────────────┐
                          │ Intervall-Zähler j inkremen-│
                          │ tieren                   │
                          └─────────────────────────┘
                                     │
                          ┌─────────────────────────┐
                          │ Bildung der Grösse Xj im │
                          │ Intervall j              │
                          └─────────────────────────┘
                                     │
                                  ╱ Ende ╲
                               ╱   des    ╲   Nein
                               ◇ Messstreifens? ◇
                                  ╲      ╱
                                     Ja
                                     ▽
                                    (A)
```

11

Ⓐ
∨

Flachstellen = Intervalle mit relativen Minima
von Xj

Mittelpunkte dieser Intervalle = mögliche
Messpositionen

Auswahl der eigentlichen Messpositionen aus allen
Mittelpunkten von Intervallen mit relativen Minima
von Xj (Minimastellen):

- keine Messpositionen auf zu schmalen Feldern
  (Xj an Minimastellen dürfen Schwellwert Xa
  nicht überschreiten und Abstand zwischen zwei
  Messpositionen muss grösser als bestimmter
  Minimalabstand sein)

- keine Mehrfachmessungen auf langen Messfeldern
  (mindestens ein Xj eines Intervalles zwischen
  zwei Messpositionen muss Schwellwert Xb überschreiten oder die drei Farbdichten an aufeinanderfolgenden Messpositionen müssen verschieden sein).

Bildung von Xj

a, b — oder — c, d

Bildung der empirischen Standardabweichungen

$S_{C_j}$, $S_{M_j}$, $S_{Y_j}$ im Intervall j (in jedem der drei Dichteverläufe)

Bildung der Summe der Absolutwerte der Abweichungen der Dichtemesswerte vom Dichtemittelwert im Intervall j in jedem der drei Dichteverläufe:

$A_{C_j}$, $A_{M_j}$, $A_{Y_j}$

a — oder — b

Bestimmung des Maximalwertes aus $S_{C_j}$, $S_{M_j}$, $S_{Y_j}$

Bildung der Summe $\sum S_j$ = $S_{C_j}$ + $S_{M_j}$ + $S_{Y_j}$

c — oder — d

Bestimmung des Maximalwertes aus $A_{C_j}$, $A_{M_j}$, $A_{Y_j}$

Bildung der Summe $\sum A_j$ = $A_{C_j}$ + $A_{M_j}$ + $A_{Y_j}$

$Xj = Sj_{max}$

$Xj = \sum Sj$

$Xj = Aj_{max}$

$Xj = \sum Aj$

**0 064 024**

Nachdem dann so die Analyse des Messstreifens abgeschlossen ist, erfolgt die eigentliche Messphase. Zunächst werden die interessierenden Messfelder oder Messfeldtypen eingegeben (Maskierung des Messfeldstreifens). Aus diesen Eingabedaten und den während dem Erkennungslauf gewonnenen möglichen Messpositionen werden dann diejenigen ausgewählt, an denen tatsächlich gemessen werden soll (im Extremfall können dies natürlich auch alle Messfelder sein). Und schliesslich wird dann der Messwagen gleichmässig über den Messstreifen hinweggeführt und an allen interessierenden Stellen werden simultan die Farbdichten in den drei Farbkanälen ermittelt. Die Messwerte werden vom Elektronikteil 6 aufbereitet und dann an den Personal-Computer 7 zur Verarbeitung bzw. Auswertung weitergeleitet. Die eigentliche Verarbeitung der Messdaten selbst ist nicht Gegenstand der Erfindung. Es sei jedoch festgehalten, dass diese Verarbeitung beim heutigen Stand der Technik bis zur vollautomatischen Steuerung der Druckanläge, auf welcher der den Messstreifen enthaltende Druckbogen hergestellt worden ist, geführt werden kann. Das nachfolgende Fliessschema zeigt die einzelnen Schritte des Messlaufs nochmals in übersichtlicher Darstellung.

(Siehe das Schema, Seite 15 f.)

14

```
                        ┌─────────────┐
                        │  Messlauf   │
                        └─────────────┘
                               │
              ╱─────────────────────────────────────╲
             ╱  Wahl der zu messenden Messfelder     ╱
            ╱   oder Messfeldtypen                   ╱
           ╱    ("Maskierung" des Messstreifens)    ╱
          ╱─────────────────────────────────────────
                               │
         ┌─────────────────────────────────────────┐
         │  Messpositionen werden aufgrund der      │
         │  gewählten Messfelder und der während    │
         │  dem Erkennungslauf ermittelten          │
         │  Positionen bestimmt                     │
         └─────────────────────────────────────────┘
                               │
         ┌─────────────────────────────────────────┐
         │  Messkopf wird gleichmässig über den     │
         │  Messstreifen bewegt und an jeder        │
         │  Messposition werden simultan drei       │
         │  Farbdichtemessungen (mit Simul-         │
         │  tanmesskopf) oder eine Farbdichte-      │
         │  messung (mit Zusatzmesskopf)            │
         │  ausgelöst.                              │
         │                                          │
         │  Uebergabe der Messwerte an Personal-    │
         │  Computer zur weiteren Verarbeitung      │
         └─────────────────────────────────────────┘
                               │
```

**0 064 024**

Der Vollständigkeit halber sei nochmals betont, dass Erkennungs- und Messlauf nicht unbedingt getrennt, d. h. in zwei separaten Durchgängen durchgeführt werden müssen, sondern selbstverständlich auch gemeinsam erfolgen können. Die eigentliche Messung kann ferner z. B. eventuell auch beim Rücklauf des Messwagens nach dem Erkennungslauf erfolgen. Da der Erkennungslauf in der Regel für jeden Farbmessstreifen nur einmal durchgeführt wird, ist diese Frage jedoch von untergeordneter Bedeutung.

Wie schon weiter vorne erwähnt, ist der Messwagen 3 mit einem Zusatzmesskopf 18 für Sonderfarben ausgerüstet. Diese in der Drucktechnik oft verwendeten sogenannten Schmuck- oder Hausfarben besitzen eine andere spektrale Zusammensetzung als die Normdruckfarben und erfordern demzufolge speziell darauf abgestimmte Messfilter, damit ein genügend hohes Messignal erzielt wird. In Ermangelung geeignet abgestimmter Densitometer begnügt man sich heute in der Regel damit, dass man diese Sonderfarben mit demjenigen Standard-Filter misst, welches den höchsten Dichtewert liefert. Für die Steuerung von Druckmaschinen ist dies jedoch vielfach unzureichend. Durch den Zusatz- oder « Huckepack »-Messkopf 18 ist es nun möglich, wahlweise Normdruckfarben und Sonderdruckfarben in gleicher Präzision zu messen. Dem Rechner wird dabei zweckmässig im Startdialog mitgeteilt, welches Farbfeld (Farbe) mit welchem Filter gemessen werden soll. Die Auswahl des entsprechenden Filters erfolgt dann rechnergesteuert, ebenso die allfällige Umschaltung vom Normal-Simultan-Messkopf 19 zum Zusatzmesskopf 18 und umgekehrt.

Eine weitere Einsatzmöglichkeit des erfindungsgemässen Abtast-Densitometers ergibt sich im Zusammenhang mit der Prüfung von Strichcodes, insbesondere etwa des EAN-Codes (Europäische Artikel-Numerierung). An EAN-Codes werden bestimmte Anforderungen gestellt, die in Normen festgelegt sind. Zur Prüfung der Codes eignen sich die Strichcodes selbst und/oder in Normen festgelegte Prüfmarken. Die Prüfung (der Druckqualität) dieser Codes erfolgt heute mittels Handprüfgeräten, bei denen ein Laser über die Prüfmarken bzw. über den EAN-Code geführt wird. Es sind keine Kombinationsgeräte bekannt, mit denen sowohl Farbdichten als auch EAN-Codes geprüft werden können, insbesondere nicht maschinell. Bisher müssen für solche Zwecke immer zwei separate Systeme eingesetzt werden, die über eigene Rechner etc. verfügen und entsprechend teuer sind. Ausserdem erfolgen die Messvorgänge für Code-Prüfung und Farbmessstreifen unabhängig und nehmen entsprechend viel Zeit in Anspruch.

Gemäss einer weiteren Ausgestaltung der Erfindung ist nun der Zusatzmesskopf 18 als Strichcode-Leser ausgebildet, wobei er mit dem Simultan-Messkopf 19 eventuell gelenkig und/oder teleskopartig verbunden sein kann, sodass er leicht auf im Bild des Druckbogens vorhandene EAN-Codes eingestellt werden kann. Die Analyse der im Druckkontrollstreifen enthaltenen EAN-Prüfmarken erfolgt dabei analog den Messfeldern des Farbmessstreifens, d. h. die Lage der Messpositionen wird in einem Erkennungs- oder Positionierlauf ermittelt und die eigentliche Dichtemessung erfolgt dann in einem separaten Messlauf, für den dasselbe gilt wie das für die Auswertung des Farbmessstreifens Gesagte. Die Abtastung von Farbmessstreifen und EAN-Prüfmarken kann natürlich simultan oder auch zeitlich versetzt erfolgen. Die eigentliche Prüfung des Codes erfolgt dann im Rechner und ist nicht Gegenstand der vorliegenden Anmeldung.

**Patentansprüche**

1. Verfahren zur farbmetrischen Analyse eines auf einem Druckträger aufgebrachten Farbmessstreifens (MS) aus einer Anzahl von Messfeldern (MF) mit jeweils unterschiedliche, mit Hilfe mehrerer Grundfarben erzeugten Farben, bei dem
— die Farbdichtewerte ($D_{C_i}$, $D_{M_i}$, $D_{Y_i}$) für jede Grundfarbe (C, M, Y) an einer Vielzahl von Abtaststellen (i) des Farbmessstreifens (MS) mittels eines Densitometers erfasst werden, indem dessen Messkopf (19) maschinell entlang dem Messstreifen (MS) geführt wird,
— aus dem Verlauf der erfassten Farbdichtewerte ($D_{C_i}$, $D_{M_i}$, $D_{Y_i}$) den einzelnen Messfeldern (MF) zugeordnete Messpositionen ermittelt werden, und
— die an den Messpositionen vorliegenden Farbdichtewerte farbmetrisch ausgewertet werden, dadurch gekennzeichnet, dass zur Ermittlung der Messpositionen
— für jeden von sich gegenseitig überlappenden, über die Länge des Farbmessstreifens (MS) verteilten Abschnitten (j) des Farbmessstreifens jeweils eine die Schwankungen der Farbdichtewerte innerhalb des jeweiligen Abschnitts repräsentierende Kenngrösse ($\Sigma A_j$; $A_{jmax}$; $\Sigma S_j$; $S_{jmax}$) aus den für die Grundfarben in dem betreffenden Abschnitt (j) erhaltenen Farbdichtewerten ermittelt wird, und
— die Messpositionen in diejenigen Extrema ($m_5$, $m_6$, $m_7$) des Verlaufs der Kenngrösse über die aufeinanderfolgenden Abschnitte (j) gelegt werden, die einer Flachstelle im Verlauf der Farbdichtewerte ($D_{C_i}$, $D_{M_i}$, $D_{Y_i}$) über den Farbmessstreifen (MS) zugeordnet sind.

2. Verfahren nach Anspruch 1, dadurch gekennzeichnet, dass die zur Bestimmung der Messpositionen herangezogenen sowie die diesen zugeordneten, für die farbmetrische Analyse verwendeten Farbdichtewerte mit einer einmaligen Abtastung des Farbmessstreifens durch den Messkopf (19) erfasst werden.

3. Verfahren nach Anspruch 1, dadurch gekennzeichnet, dass zunächst die Messpositionen aus den

16

während einer ersten Abtastung des Farbmessstreifens erfassten Farbdichtewerten ermittelt und anschliessend während einer erneuten Abtastung nur die an den ermittelten Messpositionen vorliegenden Farbdichtewerte erfasst werden.

4. Verfahren nach einem der vorangehenden Ansprüche, dadurch gekennzeichnet, dass im Falle einer Vielzahl zu analysierender gleichartiger Farbmessstreifen die jeweils gleichen Messpositionen nur einmal bestimmt werden.

5. Verfahren nach einem der vorangehenden Ansprüche, dadurch gekennzeichnet, dass als Kenngrösse die Summe ($\Sigma A_j$) oder die grösste ($A_{jmax}$) der sich für die einzelnen Grundfarben jeweils in jedem Abschnitt (j) ergebenden Absolutwertsummen ($A_{Ci}$, $A_{Mi}$, $A_{Yi}$) der Abweichungen der Farbdichtewerte einer jeden Grundfarbe von ihrem Mittelwert in dem betreffenden Abschnitt verwendet wird.

6. Verfahren nach einem der Ansprüche 1 bis 4, dadurch gekennzeichnet, dass als Kenngrösse die Summe ($\Sigma S_j$) oder die grösste ($S_{jmax}$) der sich für die einzelnen Grundfarben jeweils in jedem Abschnitt (j) ergebenden Standardabweichungen ($S_{Ci}$, $S_{Mi}$, $S_{Yi}$) der Farbdichtewerte des betreffenden Abschnitts verwendet wird.

7. Verfahren nach einem der vorangehenden Ansprüche, dadurch gekennzeichnet, dass diejenigen Extrema des Verlaufs der Kenngrösse über die Abschnitte (j), die sich im Bereich von Messfeldern unter einer vorgegebenen Minimallänge oder im Bereich von Zwischenräumen zwischen Messfeldern befinden, nicht als Messpositionen bestimmt werden.

8. Verfahren nach einem der vorangehenden Ansprüche, dadurch gekennzeichnet, dass nur diejenigen Extrema des Verlaufs der Kenngrösse über die Abschnitte (j) als Messpositionen bestimmt werden, die einen vorgegebenen ersten Schwellenwert ($X_a$) über- bzw. unterschreiten.

9. Verfahren nach einem der vorangehenden Ansprüche, dadurch gekennzeichnet, dass, wenn auf ein und demselben Messfeld (MF) des Farbmessstreifens (MS) zwei oder mehrere mögliche Messpositionen ermittelt werden, nur eine einzige ausgewählt und festgehalten wird.

10. Densitometer zur farbmetrischen Analyse eines auf einem Druckträger aufgebrachten Farbmessstreifens aus einer Anzahl von Farbmessfeldern mit jeweils unterschiedlichen, mit Hilfe mehrerer Grundfarben erzeugten Farben, mit
— einer Auflagefläche (1) für den Druckträger (5),
— einer die Auflagefläche überspannenden Brücke (2),
— einem an der Brücke geführten, mittels eines Motorantriebs (26, 27) entlang dem Farbmessstreifen (MS) beweglichen Messkopf (19) zur Erfassung der Farbdichtewerte des Farbmessstreifens an einer Vielzahl von Abtaststellen für jede Grundfarbe,
— einer Steuervorrichtung (41) zur Steuerung der Bewegung des Messkopfs (19),
— einer Signalverarbeitungsschaltung (6, 7) zur Ermittlung von den einzelnen Messfeldern (MF) des Farbmessstreifens zugeordneten Messpositionen aus dem Verlauf der erfassten Farbdichtewerte über den Farbmessstreifen und zur farbmetrischen Auswertung der an diesen Messpositionen vorliegenden Farbdichtewerte,
dadurch gekennzeichnet, dass
— die Signalverarbeitungsschaltung eine Rechenschaltung (6, 7) aufweist, welche für jeden von sich gegenseitig überlappenden, über die Länge des Farbmessstreifens verteilten Abschnitten (j) des Farbmessstreifens jeweils eine die Schwankungen der Farbdichtewerte innerhalb des jeweiligen Abschnitts repräsentierende Kenngrösse ($\Sigma A_j$ ; $A_{jmax}$ ; $\Sigma S_j$ ; $S_{jmax}$) aus den für die Grundfarben in dem betreffenden Abschnitt enthaltenen Farbdichtewerten ermittelt und welche als Messpositinen diejenigen Extrema ($m_5$, $m_6$, $m_7$) des Verlaufs der Kenngrösse über die aufeinanderfolgenden Abschnitte (j) auswählt, die einer Flachstelle im Verlauf der Farbdichtewerte über den Farbmessstreifen zugeordnet sind.

11. Densitometer nach Anspruch 10, dadurch gekennzeichnet, dass der Signalverarbeitungsschaltung (6, 7) von aussen zusätzliche, den Aufbau des Farbmessstreifens und/oder die Auswahl der abzutastenden Messpositionen betreffende Daten eingebbar sind.

12. Densitometer nach Anspruch 10 oder 11, dadurch gekennzeichnet, dass der Messkopf (19) auch manuell gesteuert verfahrbar ist.

13. Densitometer nach einem der Ansprüche 10-12, dadurch gekennzeichnet, dass die Signalverarbeitungsschaltung (6, 7) mit einer Tastatur und einem Bildschirmterminal versehen ist.

14. Densitometer nach einem der Ansprüche 10-13, dadurch gekennzeichnet, dass die Signalverarbeitungsschaltung dazu ausgebildet ist, die gemessenen Farbdichtewerte des Farbmessstreifens und/oder daraus abgeleitete Daten vorzugsweise optisch anzuzeigen.

15. Densitometer nach einem der Ansprüche 10-14, dadurch gekennzeichnet, dass es einen zusätzlichen Messkopf (18) mit wechselbaren Farbfiltern zur Messung von Sonderfarben aufweist.

16. Densitometer nach einem der Ansprüche 10-15, dadurch gekennzeichnet, dass es einen zusätzlichen als Strichkodeleser ausgebildeten Messkopf aufweist, und dass die Signalverarbeitungsschaltung (6, 7) dazu ausgebildet ist, einen vom zusätzlichen Strichkode-Messkopf gelesenen Strichkode zu prüfen.

17. Densitometer nach Anspruch 15, dadurch gekennzeichnet, dass die Signalverarbeitungsschaltung (6, 7) dazu ausgebildet ist, bei der Abtastung des Farbmessstreifens programmgesteuert auf den Haupt- oder auf den Zusatzmesskopf zu schalten.

17

18. Densitometer nach einem der Ansprüche 10-17, dadurch gekennzeichnet, dass es Mittel (33) zur Erzeugung von längs der Bewegungsbahn des Messkopfs (19) angeordneten Lichtmarkierungen (34) zum Ausrichten der Druckträger aufweist.

19. Densitometer nach Anspruch 18, dadurch gekennzeichnet, dass die Lichtmarkierungen Lichtstriche (34) sind.

20. Densitometer nach Anspruch 18 oder 19, dadurch gekennzeichnet, dass die Mittel eine Lichtquelle (33a) und eine Projektionsoptik (33b) umfassen, und dass die Projektionsoptik um eine zu ihrer optischen Achse parallele Achse drehbar gefasst ist.

21. Densitometer nach einem der Ansprüche 10-20, dadurch gekennzeichnet, dass es wenigstens einen elektromagnetischen Klemmblock (4) zum Festhalten eins Druckträgers auf der Auflagefläche (1) aufweist.

22. Densitometer nach Anspruch 21, dadurch gekennzeichnet, dass der Klemmblock (4) durch die Signalverarbeitungsschaltung (6, 7) betätigbar ist.

## Claims

1. Process for the colorimetric analysis of a color measuring strip (MS) placed on a print carrier from a plurality of measuring fields with different colors produced by means of primary colors, wherein
— the color density values ($D_{Ci}$, $D_{Mi}$, $D_{Yi}$) are determined for each primary color (C, M, Y) in a plurality of scanning positions (i) of the color measuring strip (MS) by means of a densitometer, by passing its measuring head (19) by machine along the measuring strip (MS),
— measuring positions associated with the individual measuring fields (MF) are determined from the variations of the color density values ($D_{Ci}$, $D_{Mi}$, $D_{Yi}$) detected, and
— the color density values present in the measuring positions are evaluated colorimetrically, characterized in that for the determination of the measuring positions
— for each of the mutually overlapping sections (j) distributed over the length of the color measuring strip (MS), a parameter ($\Sigma A_j$; $A_{jmax}$; $\Sigma S_j$; $S_{jmax}$) representing the fluctuations of the color density values within the section is determined from the color density values obtained for the primary colors in the section (j) concerned, and
— the measuring positions are placed into the extremes ($m_5$, $m_6$, $m_7$) of the variation of the parameter over the successive sections (j), which are associated with a flat location in the variation of the color density values ($D_{Ci}$, $D_{Mi}$, $D_{Yi}$) over the color measuring strip (MS).

2. Process according to Claim 1, characterized in that the color density values used for the determination of measuring positions and the color density values associated with said measuring positions and used for the colorimetric analysis, are determined by a single scan of the color measuring strip by the measuring head (19).

3. Process according to Claim 1, characterized in that the measuring positions are initially determined from the color density values detected during a first scan of the color measuring strip and subsequently during a second scan only the color density values present in the determined measuring positions are detected.

4. Process according to one of the preceding claims, characterized in that in the case of a plurality of similar color measuring strips, identical measuring positions are determined only once.

5. Process according to one of the preceding claims, characterized in that as the parameter the sum ($\Sigma A_j$) or the largest ($A_{jmax}$) of the absolute value sums ($A_C$, $A_M$, $A_Y$) of the deviations of the color density values in the section involved, obtained for the individual primary colors in each section (j), is used.

6. Process according to one of Claims 1 to 4, characterized in that as the parameter the sum ($\Sigma S_j$) or the largest ($S_{jmax}$) of the standard deviations ($S_C$, $S_M$, $S_Y$) obtained for the individual primary colors in each of the sections (j) of the color density values of the section involved, is used.

7. Process according to one of the preceding claims, characterized in that the extremes of the variation of the parameter over the sections (j) located within the area of measuring fields under a predetermined minimum length or within the area of intervals between measuring fields of the color measuring strip, are not determined as measuring positions.

8. Process according to one of the preceding claims, characterized in that only those extremes of the variation of the parameter over the sections (j) are determined as measuring positions, which exceed or remain below a predetermined first threshold value ($X_a$).

9. Process according to one of the preceding claims, characterized in that if two or more possible measuring positions are determined on the same measuring field (MF) of the color measuring strip (MS), only one is selected and recorded.

10. Densitometer for the colorimetric analysis of a color measuring strip applied to a print carrier from a plurality of color measuring fields of different colors produced by means of several primary colors, with
— a support surface (1) for the print carrier (5),
— a bridge (2) traversing the said support surface,

— a measuring head (19) guided on said bridge and capable of being moved along the color measuring strip (MS) by means of a motor drive (26, 27), to detect the color density values of the color measuring strip in a plurality of scanning locations for each primary color,

— control means (41) to control the movement of the measuring head (19),

— a signal processing circuit (6, 7) to determine the measuring positions associated with the individual measuring fields (MS) of the color measuring strip from the variation of the color density values detected over the length of the measuring strip and for the colorimetric evaluation of the color density values prevailing in said measuring positions,

characterized in that

— the signal processing circuit comprises a computer circuit (6, 7) which for each mutually overlapping individual section (j) of the color measuring strip, distributed over said color measuring strip, determines a parameter ($\Sigma A_j$; $A_{jmax}$; $\Sigma S_j$; $S_{jmax}$) representing the fluctuations of the color density values within the section concerned from the color density values contained in said section for the primary colors, and which selects as the measuring positions those extremes ($m_5$, $m_6$, $m_7$) of the parameter over successive sections (j) that are associated with a flat location in the variation of the color density values over the length of the color measuring strip.

11. Densitometer according to Claim 10, characterized in that supplemental data concerning the configuration of the color measuring strip and/or the selection of the measuring positions to be scanned, may be entered into the signal processing circuit (6, 7) from the outside.

12. Densitometer according to Claim 10 or 11, characterized in that the measuring head (19) may also be displaced under manual control.

13. Densitometer according to one of Claims 10-12, characterized in that the signal processing circuit (6, 7) is provided with a keyboard and an image screen terminal.

14. Densitometer according to one of Claims 10-13, characterized in that the signal processing circuit is designed to preferably optically display the color density values of the color measuring strip and/or data derived from them, or to issue them in another form.

15. Densitometer according to one of Claims 10-14, characterized in that it comprises an additional measuring head (18) with interchangeable color filters for the measurement of special colors.

16. Densitometer according to one of Claims 10-15, characterized in that it comprises an additional measuring head designed as a bar code reader, and that the signal processing circuit (6, 7) is capable of testing a bar code read by the additional bar code measuring head.

17. Densitometer according to Claim 15, characterized in that the signal processing circuit (6, 7) is capable of switching in the course of the scanning of the color measuring strip to the principal or the additional measuring head, under the control of a program.

18. Densitometer according to one of Claims 10-17, characterized in that it comprises means (33) to produce optical markings (34) arranged along the moving path of the measuring head (19) for the alignment of the print carrier.

19. Densitometer according to Claim 18, characterized in that the optical markings are light bars (34).

20. Densitometer according to Claim 18 or 19, characterized in that said means comprise a source of light (33a) and optical projection means (33b) and that the optical projection means are mounted rotatably around an axle parallel to their optical axis.

21. Densitometer according to one of Claims 10-20, characterized in that it comprises at least one electromagnetic clamping block (4) to hold a print carrier on the support surface (1).

22. Densitometer according to Claim 21, characterized in that the clamping block (4) may be actuated by the signal processing circuit (6, 7).

**Revendications**

1. Procédé pour l'analyse colorimétrique d'une bande de mesure de couleur (MS) déposée sur un support d'impression et se composant d'un certain nombre de zones de mesure (MF) ayant chacune des couleurs différentes produites au moyen de plusieurs couleurs fondamentales, dans lequel

— les valeurs de densité de couleur $D_{Ci}$, $D_{Mi}$, $D_{Yi}$) pour chaque couleur fondamentale (C, M, Y) sont détectées en un grand nombre de positions d'analyse (i) de la bande de mesure de couleur (MS) au moyen d'un densitomètre dont la tête de mesure (19) est guidée mécaniquement le long de la bande de mesure (MS),

— à partir de la courbe des valeurs détectées de densité de couleur ($D_{Ci}$, $D_{Mi}$, $D_{Ui}$), des positions de mesure associées aux différentes zones de mesure (MF) sont obtenues, et

— les valeurs de densité de couleur existant dans les positions de mesure sont évaluées colorimétriquement,

procédé caractérisé en ce que, pour la détermination des positions de mesure,

— pour chacune des éléments (j) de la bande de mesure de couleur se chevauchant mutuellement et réparties sur la longueur de la bande de mesure de couleur (MS), respectivement une grandeur caractéristique ($A_j$; $A_{jmax}$; $S_J$; $S_{Jmax}$) représentant les variations des valeurs de densité de couleur à l'intérieur de l'élément correspondant est déterminée à partir des valeurs de densité de couleur obtenues pour les couleurs fondamentales dans l'élément correspondant (j), et

— les positions de mesure correspondant aux points extrêmes ($m_5$, $m_6$, $m_7$) de la courbe de grandeur caractéristique sont placées sur les éléments successifs (j), qui sont associés à une partie plane de la courbe des valeurs de densité de couleur ($D_{Ci}$, $D_{Mi}$, $D_{Yi}$) sur la bande de mesure de couleur (MS).

2. Procédé selon la revendication 1, caractérisé en ce que les valeurs de densité de couleur utilisées pour la détermination des positions de mesure ainsi que les valeurs de densité de couleur associées aux premières et utilisées pour l'analyse colorimétrique sont déterminées par la tête de mesure 19 en une seule exploration de la bande de mesure de couleur.

3. Procédé selon la revendication 1, caractérisé en ce qu'initialement les positions de mesure sont obtenues à partir des valeurs de densité de couleur déterminées pendant une première exploration de la bande de mesure de couleur et ensuite, pendant une nouvelle exploration, seules les valeurs de densité de couleur existant dans les positions de mesure obtenues sont déterminées.

4. Procédé selon l'une des revendications précédentes, caractérisé en ce que, dans le cas d'un grand nombre de bandes de mesure de couleur de même nature à analyser, les positions de mesure respectivement identiques ne font l'objet que d'une seule détermination.

5. Procédé selon l'une des revendications précédentes, caractérisé en ce que comme grandeur de mesure, on utilise la somme ($\Sigma A_j$) ou bien la plus grande ($A_{jmax}$) des sommes de valeurs absolues ($A_{Ci}$, $A_{Mi}$, $A_{Yi}$), qui ont été obtenues pour les différentes couleurs fondamentales dans chaque élément respectif (j) en ce qui concerne les écarts des valeurs de densité de couleur de chaque couleur fondamentale par rapport à sa valeur moyenne dans l'élément correspondant.

6. Procédé selon l'une des revendications 1 à 4, caractérisé en ce que, comme grandeur caractéristique, on utilise la somme ($\Sigma S_j$) ou la plus grande ($S_{jmax}$) des écarts standards ($S_{Ci}$, $S_{Mi}$, $S_{Yi}$) obtenus pour les différentes couleurs fondamentales dans chaque élément respectif (j) en ce qui concerne les valeurs de densité de couleur de l'élément correspondant.

7. Procédé selon l'une des revendications précédentes, caractérisé en ce que les points extrêmes de la courbe de grandeur caractéristique des éléments (j), qui sont en dessous d'une longueur minimale prédéterminée dans une région de zones de mesure ou bien qui se trouvent dans une région d'espaces intermédiaires entre des zones de mesures ne font pas l'objet de détermination à titre de positions de mesure.

8. Procédé selon l'une des revendications précédentes, caractérisé en ce que seuls les points extrêmes de la courbe de grandeur caractéristique, qui sont supérieurs ou inférieurs à une première valeur de seuil prédéterminée ($X_a$), font l'objet sur les éléments (j) de détermination à titre de positions de mesure.

9. Procédé selon l'une des revendications précédentes, caractérisé en ce que, lorsqu'on détermine, sur une seule et même zone de mesure (MF) de la bande de mesure de couleur (MS), deux ou plusieurs positions de mesure possibles, une seulement est sélectionnée et maintenue.

10. Densitomètre pour une analyse colorimétrique d'une bande de mesure de couleur déposée sur un support d'impression, à partir d'un certain nombre de zones de mesure de couleur comportant des couleurs respectivement différentes et produites au moyen de plusieurs couleurs fondamentales, comportant

— une surface d'appui (1) pour le support d'impression (5),

— un pont (2) couvrant la surface d'appui,

— une tête de mesure (19), guidée sur le pont déplaçable au moyen d'un entraînement motorisé (26, 27) le long de la bande mesure de couleur (MS) pour déterminer les valeurs de densité de couleur de la bande de mesure de couleur en un grand nombre de positions d'analyse pour chaque couleur fondamentale,

— un dispositif de commande (41) pour la commande du mouvement de la tête de mesure (19),

— un circuit de traitement de signaux (6, 7) pour déterminer les positions de mesure associées aux différentes zones de mesure (MF) de la bande de mesure de couleur à partir de la courbe des valeurs de densité de couleur obtenues sur la bande de mesure de couleur et pour une évaluation colorimétrique des valeurs de densité de couleur existant dans ces positions de mesure,
caractérisé en ce que

— le circuit de traitement de signaux comporte un circuit de calcul (6, 7), qui détermine, pour chacun des éléments (j) de la bande de mesure de couleur qui se chevauchent mutuellement et qui sont répartis sur la longueur de la bande de mesure de couleur, une grandeur caractéristique ($A_j$, $A_{jmax}$ ; $S_j$ ; $S_{jmax}$) représentant respectivement les variations des valeurs de densité de couleur à l'intérieur de l'élément correspondant, à partir des valeurs de densité de couleur obtenues pour les couleurs fondamentales dans l'élément correspondant, et qui sélectionne comme positions de mesure les points extrêmes ($m_5$, $m_6$, $m_7$) de la courbe de grandeur caractéristique sur les éléments successifs (j), qui sont associés à une partie plane de la courbe des valeurs de densité de couleur sur la bande de mesure de couleur.

11. Densitomètre selon la revendication 10, caractérisé en ce que les données additionnelles concernant la structure de la bande de mesure de couleur et/ou la sélection des positions de mesure à analyser peuvent être introduites de l'extérieur dans le circuit de traitement de signaux (6, 7).

12. Densitomètre selon la revendication 10 ou 11, caractérisé en ce que la tête de mesure (19) est également déplaçable par commande manuelle.

13. Densitomètre selon l'une des revendications 10 à 12, caractérisé en ce que le circuit de traitement

20

de signaux (6, 7) est pourvu d'un clavier à touches et d'un terminal visualiseur.

14. Densitomètre selon l'une des revendications 10 à 13, caractérisé en ce que le circuit de traitement de signaux est agencé de manière à indiquer, de préférence optiquement, les valeurs de densité de couleur mesurées sur la bande de mesure de couleur et/ou des données dérivées de celles-ci.

15. Densitomètre selon l'une des revendications 10 à 14, caractérisé en ce qu'il comporte une tête de mesure (18) additionnelle comportant des filtres de couleurs changeables pour une mesure de couleurs spéciales.

16. Densitomètre selon l'une des revendications 10 à 15 caractérisé en ce qu'il comporte une tête de mesure additionnelle agencée sous forme d'un lecteur de code à barres et en ce que le circuit de traitement de signaux (6, 7) est agencé de manière à contrôler un code à barres lu par une tête additionnelle de mesure de codes à barres.

17. Densitomètre selon la revendication 15, caractérisé en ce que le circuit de traitement de signaux (6, 7) est agencé de manière à effectuer sous la commande d'un programme, lors de l'analyse de la bande de mesure de couleur, une commutation sur la tête de mesure principale ou la tête de mesure additionnelle.

18. Densitomètre selon l'une des revendications 10 à 17, caractérisé en ce qu'il comporte un moyen (33) pour produire des repères lumineux (34) disposés le long de la voie de déplacement de la tête de mesure (19) et servant à l'orientation du support d'impression.

19. Densitomètre selon la revendication 18, caractérisé en ce que les repères lumineux sont des traits lumineux (34).

20. Densitomètre selon la revendication 18 ou 19, caractérisé en ce que les moyens comprennent une source lumineuse (33a) et un système optique de projection (33b) et en ce que le système optique de projection est monté de façon à pouvoir tourner autour d'un axe parallèle à son axe optique.

21. Densitomètre selon l'une des revendications 10 à 20, caractérisé en ce qu'il comporte au moins un bloc électromagnétique de serrage (4) pour maintenir un support d'impression sur la surface d'appui (1).

22. Densitomètre selon la revendication 21, caractérisé en ce que le bloc de serrage (4) peut être actionné par le circuit de traitement de signaux (6, 7).

**Fig. 1**

_Fig. 2_

34a · 34 · MF · 34 · 34a · MS · 34a · 33a · 33 · 32 · 33b · 36 · 3 · 20 · 34a · 34 · 34a · 34 · 5 · 35 · 2 · 13 · 14 · 12 · 11

0 064 024

2

Fig. 3

Fig. 5

Fig. 4

_Fig. 6a_

_Fig. 6b_

MF 5    MF 6

MS

$D_{C_i}$
$D_{M_i}$
$D_{Y_i}$

Fig. 7a

$D_C$

$D_M$

$D_Y$

i

$X_j$

Fig. 7b

$X_a$

$X_b$

$m_5$    $m_8$    $m_6$    $m_7$    j

6

**Fig. 8**

Fig. 9

Fig. 10